# EUROPEAN PATENT APPLICATION

(11) **EP 1 189 214 A2**
(43) Date of publication of application: **20.03.2002**
(21) Application number: 01307964.5
(22) Date of filing: 19.09.2001
(51) Int. Cl.: G11B 7/08

(54) **Mechanism for adjusting vertical and horizontal angle position of a guiding shaft for guiding an optical pickup**

(30) Priority: 19.09.2000 JP 2000282985; 20.09.2000 JP 2000284554
(71) Applicant: Mitsumi Electric Company Ltd., Chofu-shi Tokyo (JP)
(72) Inventor: Hori, Ken'ichi, c/o Mitsumi Electric Co., Ltd., Atsugi-shi, Tokyo (JP); Yamada, Tsukasa, c/o Mitsumi Electric Co., Ltd., Atsugi-shi, Tokyo (JP)
(74) Representative: Moir, Michael Christopher

(57) **Abstract**

An angle-adjusting mechanism comprises a bolt (62), screwed into a female thread formed on a base plate (25), and an elastic member (61) attached to a first plate surface of the base plate (25) and biasing a circumferential surface of a guiding shaft (35) arranged above the first plate surface so that the guiding shaft is brought close to the first plate surface. A top end surface of the bolt (62) and the elastic member (61) co-operate with each other to hold the guiding shaft (35). The guiding shaft is adjusted in a vertical direction perpendicular to the first plate surface by rotation of the bolt, and is held in a position at which the bolt rotation is terminated.

## Description

### Background of the Invention

This invention relates to an angle-adjusting mechanism for adjusting a vertical-angle position of a guiding shaft for guiding the movement of an optical pickup used in an optical disc drive, and an off-centering-adjusting mechanism for adjusting a horizontal-angle position of the guiding shaft.

According to demand for increased optical-disc recording capacity and accelerated optical-disc access speed and other improvements, it is necessary for an optical disc drive to have a high-precision mechanism. In order to satisfy the demand, there is, for example, a need for increased precision in dimensioning parts of the optical disc drive. However, as a practical matter it is difficult to increase dimension precision by simply selecting those parts meeting a high-precision standard from parts manufactured under present manufacturing precision, since this will result in a lot of the parts not finding use. And this increases the manufacturing cost of the optical disc drive.

In order to realize high precision without increasing manufacturing cost, a mechanism is proposed that is capable of adjusting positions of parts so that some unevenness of the parts is tolerated.

Part positions to be adjusted in an optical disc drive are the vertical-angle position and the horizontal-angle position of the guiding shaft for guiding the movement of the optical pickup. The horizontal-angle position of the guiding shaft may be also called an off-centering.

If the vertical-angle and horizontal-angle positions of the guiding shaft are not accurately adjusted, a laser beam irradiated from the optical pickup cannot properly irradiate a data reproducing/recording surface of the optical disc. More particularly, an optical axis of the laser beam from the optical pick-up is inclined to a main surface of a disc table supporting and rotating the optical disc or to the data reproducing/recording surface. This may be called a skew deviation. Furthermore, the laser beam cannot focus on the data reproducing/recording surface of the optical disc. Therefore, an angle-adjusting mechanism and an off-centering-adjusting mechanism for the guiding shaft are very important for the optical disc drive.

As the angle-adjusting mechanism, the following mechanism is proposed and used. In the angle-adjusting mechanism, through-holes are radially formed on a circumferential surface of a guiding shaft near both ends in an axis direction of the guiding shaft. On the other hand, female threads are formed on a main surface of a supporting plate according to the through-holes. Coil springs are arranged on the female threads. The guiding shaft is laid on the coil springs. Furthermore, screws are screwed into the female threads through the through-holes of the guiding shaft and the coil springs. Thus, the guiding shaft is held over the main surface of the supporting plate through the coil springs by the screws. By screwing in/out the screws, the vertical angle of the guiding shaft is adjusted and the guiding shaft is held at that point.

On the other hand, an off-centering-adjusting mechanism is, for example, disclosed in Japanese Unexamined Patent Publication Tokkai Hei 10-64207 (JP-A 64207/1998) and Japanese Unexamined Patent Publication Tokkai 2000-20962 (JP-A 20962/2000). Furthermore, the present applicant proposes an off-centering-adjusting mechanism in Japanese Patent Application Tokugan Hei 11-177510.

However, the angle-adjusting mechanism mentioned above provides problems in that the parts are large in number, the structure is intricate, and a necessary arranging space is wide. Particularly because a screw head is arranged on an upper region of the circumference surface of the guiding shaft, the necessary space of the mechanism is wide in a height or thickness direction. Therefore, the angle-adjusting mechanism is disadvantageous to reducing thickness or height of the optical disc drive.

On the other hand, the off-centering-adjusting mechanism disclosed in Japanese Unexamined Patent Publication Tokkai Hei 10-64207 and Japanese Unexamined Publication Tokkai 2000-20962 also provide problems in that the parts are large in number, the structure is intricate, and a necessary arranging space is wide. Furthermore, the off-centering-adjusting mechanism as disclosed in Japanese Patent Application Tokugan Hei 11-177510 applied by the present applicant may provide an inconvenience in that the guiding shaft cannot be adjusted and held unless both of the screws are rotated.

### Summary of the Invention:

It is an object of the preferred embodiments of this invention to deal with disadvantages mentioned above and to thereby provide an angle-adjusting mechanism for adjusting a vertical-angle position of a guiding shaft for guiding the movement of an optical pickup, which angle-adjusting mechanism is simple in structure, small in arranging space, and contributes to ease in adjusting and holding the guiding shaft.

It is another object of the preferred embodiments of this invention to provide an off-centering-adjusting mechanism for adjusting a horizontal-angle position of the guiding shaft for guiding the movement of an optical pickup, which mechanism is simple in structure, small in arranging space, and contributes to ease of adjusting and holding the guiding shaft.

The other object, features, and advantages of this invention will become clear as the description proceeds.

This invention is directed to an angle-adjusting mechanism for adjusting and holding a vertical angle position, in a vertical direction perpendicular to a first plate surface of a base plate, of a guiding shaft for guiding an optical pickup so that the optical pickup is moved in a predetermined disc radial direction. The base plate is provided with a female thread formed therein so that the female thread is bored through the base plate in a thickness direction perpendicular to the first plate surface of the base plate. The mechanism comprises a bolt screwed in the female thread and an elastic member attached on the first plate surface and forcing a circumference surface of the guiding shaft arranged above the first plate surface so that the guiding shaft is brought close to the first plate surface. A top end surface of the bolt and the elastic member cooperate with each other in holding the guiding shaft The guiding shaft is adjusted in the vertical direction by screwing the bolt and held by stopping screwing the bolt.

This invention is further directed to an off-centering-adjusting mechanism for adjusting and holding a horizontal angle position, in a horizontal direction parallel to a first plate surface of a base plate, of a guiding shaft for guiding an optical pickup so that the optical pickup is moved in a predetermined disc radial direction. The base plate is provided with a female thread formed therein so that the female thread is bored through the base plate in a thickness direction perpendicular to the first plate surface of the base plate. The mechanism comprises a bolt screwed in the female thread and an elastic member attached on the first plate surface and forcing a circumference surface of the guiding shaft arranged on the first plate surface so that the guiding shaft is pushed in the horizontal direction. The bolt is provided with a main body screwing in the female thread and an eccentric cam formed on a top end surface of the main body so as to upwardly protrude and to be eccentric with respect to a center axis of the main body. A circumference surface of the eccentric cam and the elastic member cooperate with each other in holding the guiding shaft. The guiding shaft is adjusted in the horizontal direction by screwing the bolt and held by stopping screwing the bolt.

This invention is still further directed to an angle position-adjusting mechanism for adjusting and holding an angle position of a guiding shaft for guiding an optical pickup so that the optical pickup is moved in a predetermined disc radial direction. The base plate is provided with a female thread formed therein so that the female thread is bored through the base plate in a thickness direction perpendicular to the first plate surface of the base plate. The mechanism comprises a bolt screwed in the female thread and an elastic member attached on the first plate surface and forcing in a first direction a circumference surface of the guiding shaft arranged above the first plate surface. The bolt and the elastic member cooperate with each other in holding the guiding shaft. The guiding shaft is adjusted in a first direction and a second direction opposite to the first direction by screwing the bolt and held by stopping screwing the bolt.

### Brief Description of the Drawings:

Preferred features of the present invention will now be described, by way of example only, with reference to the accompanying drawings, in which:-
Figs. 1A and 1B are a partial side view of a conventional angle-adjusting mechanism, and a cross-sectional view taken along line A-A in Fig. 1A;
Fig. 2 is a perspective view of a tray incorporated-type disc drive to which this invention is applicable;
Fig. 3A is a schematic perspective plan view of the tray incorporated-type disc drive illustrated in Fig. 2 at a state where a tray is pulled out thereof;
Fig. 3B is a schematic perspective left-hand side view showing the tray incorporated type disc drive illustrated in Fig. 3A;
Fig. 3C is a schematic perspective right-hand side view showing the tray incorporated type disc drive illustrated in Fig. 3A;
Fig. 4A is a perspective plan view showing a driving unit for use in the tray incorporated type disc drive illustrated in Fig. 2;
Fig. 4B is a perspective left-hand side view showing the driving unit illustrated in Fig. 4A;
Fig. 5 is a top view showing an existing driving unit for use in an existing tray incorporated type disc drive;
Fig. 6 is a bottom view showing the existing driving unit illustrated in Fig. 5;
Fig. 7 is a plan view showing an angle-adjusting mechanism for adjusting a vertical angle position of a guiding shaft for guiding the movement of an optical pickup according to an embodiment of this invention;
Fig. 8 is a cross sectional view taken along a line E-E in Fig. 7;
Fig. 9 is a cross sectional view showing another angle-adjusting mechanism according to the embodiment of this invention;
Fig. 10 is a side view showing an example of a leaf spring used in this invention;
Fig. 11 is a plan view showing an off-centering-adjusting mechanism for adjusting a horizontal angle position of the guiding shaft for guiding the movement of an optical pickup according to another embodiment of this invention;
Fig. 12 is a cross sectional view taken along a line E'-E' in Fig. 11; and
Fig. 13 is a cross sectional view showing another off-centering-adjusting mechanism according to the embodiment of this invention.

### Description of the Preferred Embodiments:

In order to facilitate an understanding of the present invention, description will be at first made with reference to the drawing about the angle-adjusting mechanism as the conventional technique related to this invention described in the background of this specification.

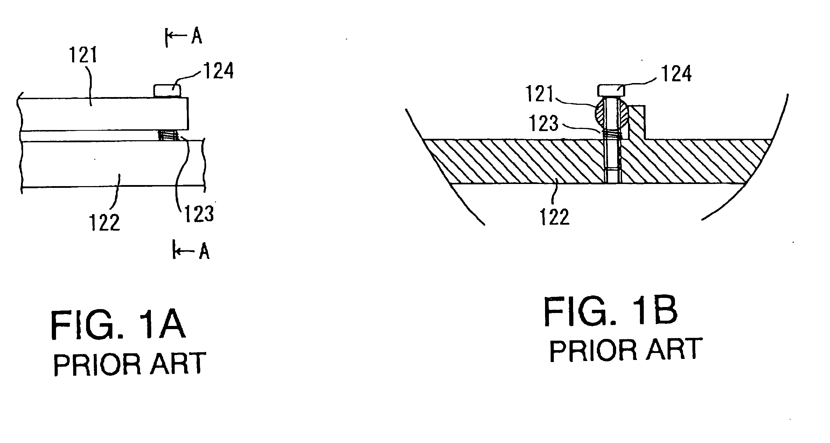

As the conventional angle-adjusting mechanism, a mechanism as shown in Figs. 1A and 1B is, for example, proposed and used. Referring to Figs. 1A and 1B, through holes radially are formed on a circumference surface of a guiding shaft 121 near both ends in an axis direction of the guiding shaft 121. On the other hand, female threads are formed on a main surface of a supporting plate 122 according to the through holes. Coil springs 123 are arranged on the female threads. The guiding shaft 121 is laid on the coil springs 123. Furthermore, screws 124 are screwed into the female threads through the through holes of the guiding shaft 121 and the coil springs. Thus, the guiding shaft 121 is held over the main surface of the supporting plate 122 through the coil springs 123 by the screws 124. By screwing in/out the screws 124, the vertical angle of the guiding shaft 121 is adjusted and the guiding shaft 121 is held at that point.

The conventional angle-adjusting mechanism has problems described in the background.

Now, a preferred embodiment of the present invention will be described with reference to the drawings.

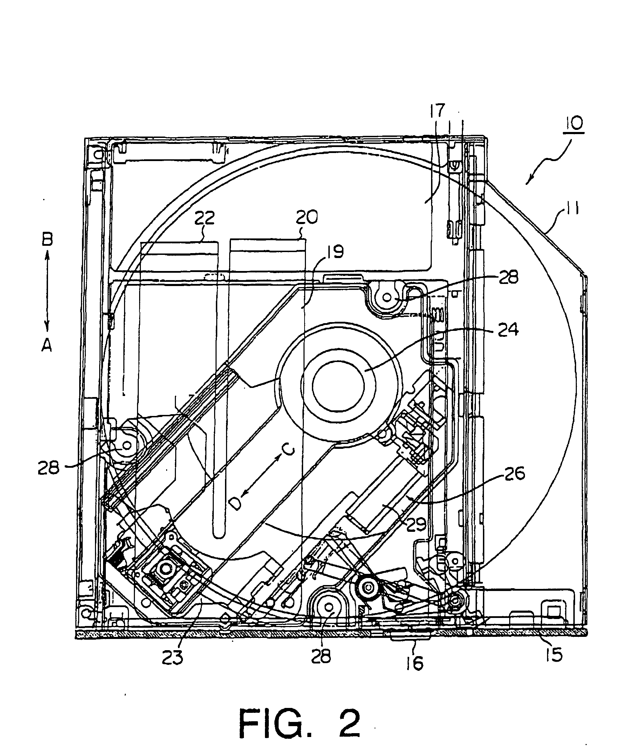

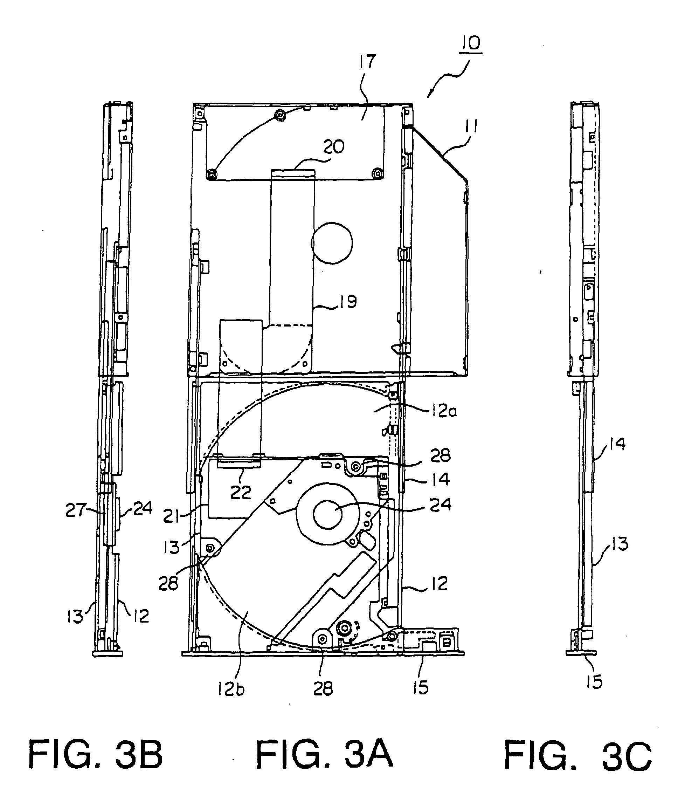

Referring to Figs. 2, 3A, 3B, and 3C, the description will proceed to a disc drive 10 to which this invention is applicable. The illustrated disc drive 10 is an apparatus of a type which is contained in a chassis of a note-type personal computer (not shown). In addition, the illustrated disc drive 10 is a tray incorporated type disc drive where a disc driving/reproducing mechanism such as an optical pickup, a disc motor, a turn table, and so on is incorporated in (or mounted on) a tray 12 in the manner which will later be described. Fig. 2 shows a state in which the tray 12 is moved at a disc mounted position where the tray 12 is received in a main chassis (outer case) 11. Figs 3A through 2C collectively show a state in which the tray 12 is moved at a disc exchange position where the tray 12 is pulled out of the main chassis (outer case) 11.

The disc drive 10 comprises the above-mentioned tray 12 for receiving a disc (CD-ROM) (not shown), a sub-chassis 13 for supporting the tray 12, and a tray sliding mechanism 14 for slidably supporting the tray 12.

The tray 12 is formed to have a width size smaller than a disc's external form so that a part of the disc (not shown) is jutted out from the tray 12. In addition, the tray 12 is slidable back and forth for the main chassis 11 by manual operation by using the tray sliding mechanism 14 in a direction depicted at arrows A and B in Fig. 2. In Fig. 2, the tray 12 is positioned at the disc mounted position so that the tray 12 is inserted in an insertion direction depicted at the arrow B. In Figs. 3A through 3C where the tray 12 is pulled out in a pulling out direction depicted at the arrow A, the tray 12 is positioned at the disc exchange position where the disc is exchanged for the tray 12.

As shown in Fig. 3A, the tray 12 has a disc opposite surface 12a for forming a space for receiving the disc and an opening 12b for the optical pickup and the turn table that is bored in the disc opposite surface 12a. The disc opposite surface 12a has a width size smaller than the disc's external form and is formed so as to cover an area which is equal to about two-thirds of the disc. With this structure, it is possible to miniaturize the disc drive 10.

The tray 12 has a front end to which a front bezel (panel) 15 is fixed. The front bezel 15 is integrated with the tray 12 to slidably move back and fourth in the direction depicted at the arrows A and B in Fig. 2. The front bezel 15 has a switch button 16 on the right-hand side of a center thereof that is for releasing a lock by a lock mechanism (not shown) on pulling out the tray 12. Accordingly, when the switch button 16 is turned on at the state illustrated in Fig. 2, the front bezel 15 projects for the main chassis 11 in the pulling out direction depicted at the arrow A by a predetermined amount in the manner already known. Therefore, operation of pulling out the tray 12 is easy.

The main chassis 11 has a rear part in which a circuit board 17 is disposed. On the sub-chassis 13 for supporting the tray 12, a driving unit 18 which will later be described is mounted. Inasmuch as the tray 12, together with the driving unit 18, moves in the direction depicted at the arrows A and B as described above, a connection between the driving unit 18 and the circuit board 17 is carried out by using a flexible circuit board 17. In addition, the flexible circuit board 17 has an end of the driving unit side that is connected to a connector (terminal portion) 22 disposed on a motor base 21.

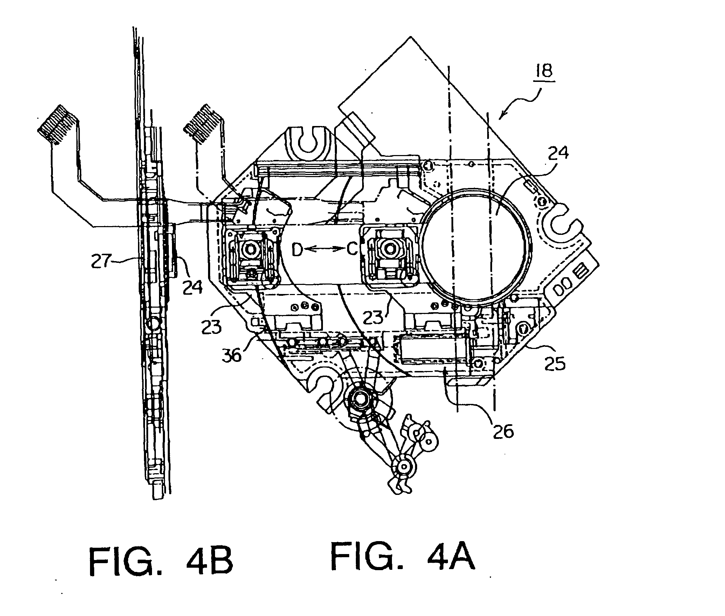

Referring now to Figs. 4A and 4B in addition to Figs. 2 through 2C, the description will proceed to the driving unit 18. The driving unit 18 mounts a pickup portion 23, a turn table 24, and so on thereon. As described above, the driving unit 18 is disposed on the sub-chassis 13 upwards. The driving unit 18 comprises the turn table 24 for rotatably holding the disc (not shown), a base plate 25 mounted on an upper portion of the sub-chassis 13, a pickup portion 23 slidably mounted on the base plate 25, a pickup driving portion 26 for moving the pickup portion 23 in a predetermined disc radial direction, a disc motor 27 for rotating the turn table 24, and so on. The pickup portion 23 picks up data from the disc (not shown). The turn table 24 has a disc table surface 24a for holding the disc (not shown).

Although the base plate 25 is put in the opening 12b of the tray 12, vibration control members 28 for absorbing vibrations are disposed between the sub-chassis 13 and the base plate 25. Accordingly, inasmuch as vibrations in the pickup portion 23 mounted on the base plate 25 and the turn table 24 are absorbed by the vibration control members 28, an influence of the vibrations is mitigated on a slide movement of the tray 12.

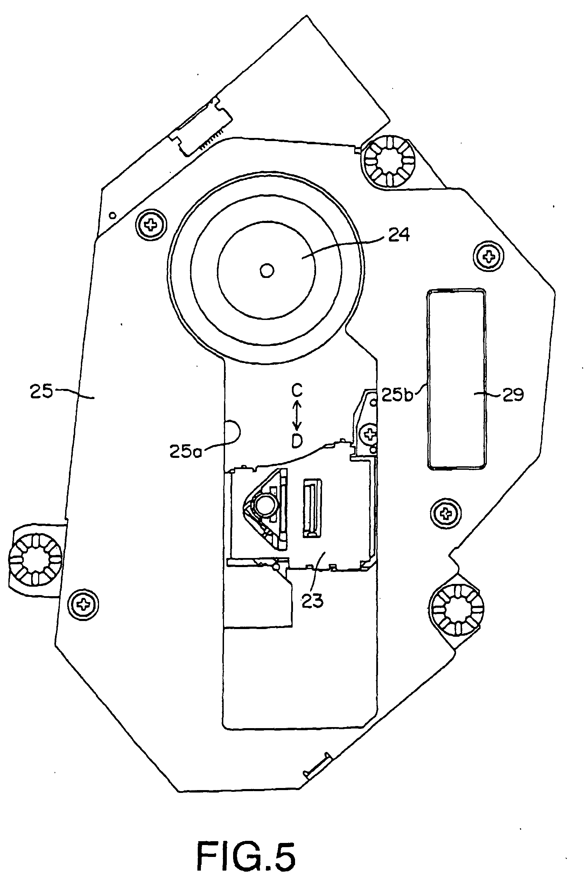

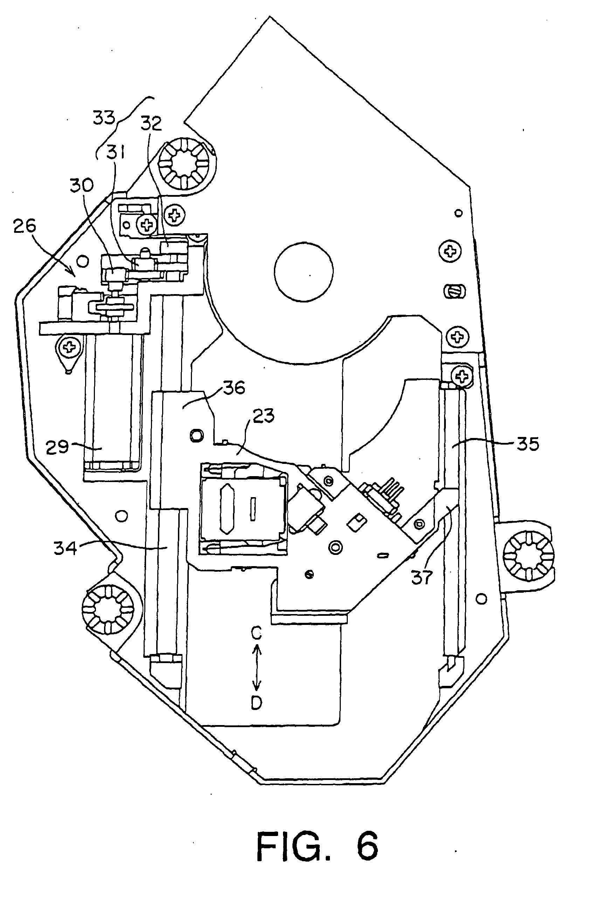

Referring now to Figs. 5 and 6, the description will proceed to pickup driving portion for driving the pickup portion 23 in disc radial directions depicted at arrows C and D. Although a base plate 25 shown in Figs. 5 and 6 and the base plate 25 shown in Figs. 2 to 4 are apparently different in shape from each other, both are substantially equal to each other.

As shown in Fig. 5, the base plate 25 has a long hole 25a formed therein. The long hole 25a has a formed position that corresponds to a moving direction of the pickup portion 23. The base plate 25 further has a hole 25b formed therein. The hole 25b receives therein and exposes a part of a pickup driving motor 29 so that the disc drive 10 is reduced in thickness.

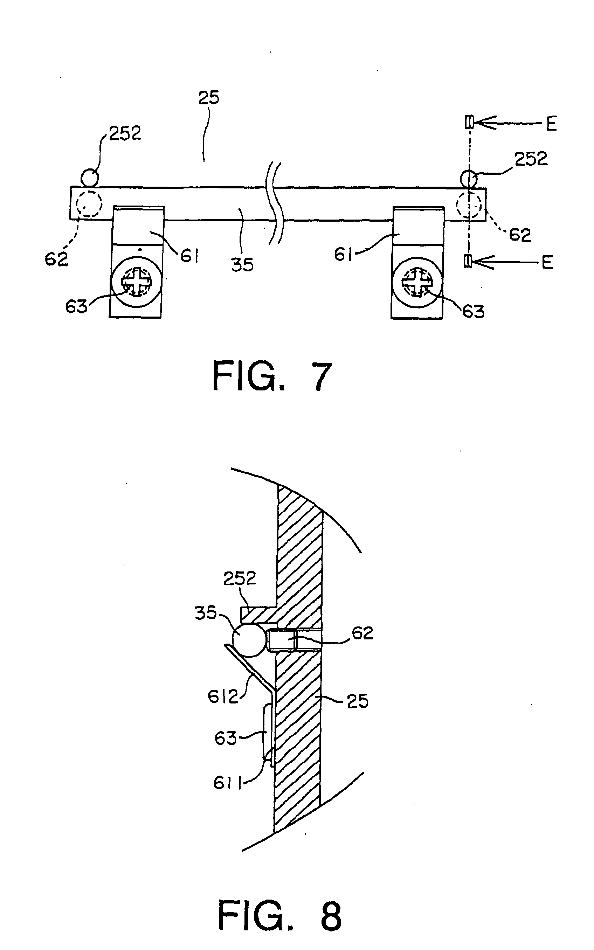

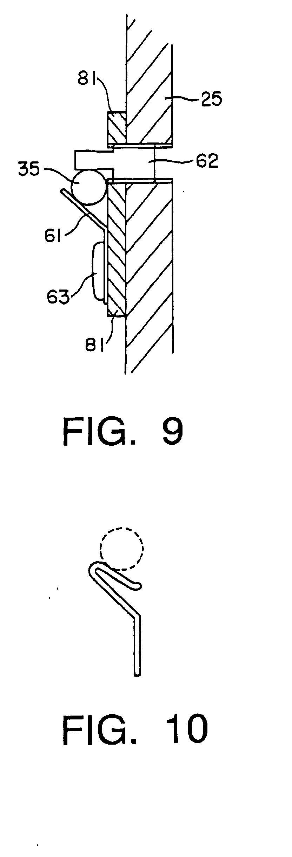

As shown in Fig. 6, a pickup driving portion 26 is arranged on a back side of the base plate 25. The pickup driving portion 26 is structured by the pickup driving motor 29 having a driving shaft on which a gear 30 is mounted, a pickup driving mechanism 33 including other gears 31 and 32 engaged with the gear 30, a lead screw 34 driven through the pickup driving mechanism 33, a guide portion (guide shaft) 35 extending in parallel with the lead screw 34 to guide a movement of the pickup portion 23, an angle-adjusting mechanism (illustrated with referring to Figs. 7 to 10 below) for adjusting a vertical angle of the guiding shaft 35, and an off-centering-adjusting mechanism (illustrated with referring to Figs. 10 to 13 below) for adjusting a horizontal angle position of the guiding shaft 35.

The lead screw 34 serving as the main shaft is arranged to extend in parallel with the disc radial direction C and D. The pickup portion 23 has the engaging portion 36 for engaging with the sleds of the lead screw 34. On the other hand, the guide shaft 35 acting as the sub-shaft extends in parallel with the lead screw 34 as shown in Fig. 6 and is for guiding a sled movement of the pickup portion 23. The pickup portion 23 includes a sliding contact portion (projection portion) 37 having a U-shaped cross section that is slidably supported by the guide shaft 35. Thus, the pickup portion 23 is moved in the disc radial direction C and D.

### First Embodiment

Now, the description will proceed to a subject matter, that is, the angle-adjusting mechanism according to a first embodiment of this invention with referring to Figs 7 to 10.

The mechanism is, as like to the conventional mechanism shown in Figs 1A and 1B, used for adjusting and holding a vertical angle position, in a vertical direction perpendicular to a back surface (which is the left side in Fig. 8) of the back and a front surface of the base plate 25, of the guiding shaft 35 for guiding the optical pickup 23 so that the optical pickup 23 is moved in the disc radial direction (C, D in Figs. 2 and 4 to 6).

The base plate is provided with female threads formed therein so that the female threads are bored through the base plate 25 in a thickness direction perpendicular to said first plate surface of said base plate 25.

The mechanism comprises two combinations of a bolt 62 and a leaf spring 61 as an elastic member. The bolt 62 is screwed in the female thread. The leaf spring 61 is attached on the back surface. Furthermore, the leaf spring elastically forces a circumference surface of the guiding shaft 35 arranged above the back surface so that the guiding shaft 35 is brought close to the back surface of the base plate 25.

The combinations correspond to one and the other ends of the guiding shaft 35 in a longitudinal direction, respectively.

A top end surface of the bolt 62 and the leaf spring 61 cooperate with each other in holding the guiding shaft 35 as shown in Fig. 8.

The leaf spring 61 is provided with a first plate portion 611 attached on the back surface of the base plate 25 by a bolt 63 and a second plate portion 612 extended from the first plate portion 611 so that an angle between the back surface and the second plate portion 612 is less than 90 degrees. Because the second plate portion 612 is at an angle less than 90 degrees with the back surface, the guiding shaft 35 is not fall away.

The base plate 25 is further provided with a protrusion 252 on the back surface for cooperating with the top end surface of the bolt 62 and the leaf spring 61 in holding the guiding shaft 35.

The bolt 62 has no thread head and has a dent portion formed on a bottom end surface of the bolt 62 for receiving and engaging with a tool (not shown) such as a screwdriver or a wrench which rotates the bolt 62.

With this structure, when the bolt 62 is screwed into (turned to the right) or screwed out (turned to the left), the top surface of the bolt 62 is moved upwardly or downwardly. Consequently, the guiding shaft 35 is moved upwardly against a force by the leaf spring 61 or downwardly by forcing by the leaf spring 61. Thus, the guiding shaft 35 is adjusted in the vertical direction by screwing the bolt 62 and held at that position by stopping screwing the bolt 62. Furthermore, if the bolts 62 are screwed independently from each other, an incline of the guiding shaft 35 in the vertical direction can be adjusted.

In the angle-adjusting mechanism according to this invention, the parts are small in number, the structure is simple, and a necessary space for arranging is small. Particularly, because the bolt 62 has no screw head and therefore the screw head is never arranged on not only an upper region of the circumference surface of the guiding shaft 35 but also on both sides of the base plate 25, the necessary space of the mechanism is small in a height or a thickness direction. Thus, the angle-adjusting mechanism is advantageous to reducing thickness or height of the optical disc drive.

As a transformation of the embodiment, the guiding shaft 35 is arranged above the base plate 25 through a supporting plate 81 as shown in Fig. 9 so that the guiding shaft 35 is apart from the back surface of the base plate 25. Although a protrusion 812 is formed on the supporting plate 81 in one body with each other in Fig. 9, a protrusion is formed on the base plate 25.

Furthermore, the leaf spring 61 may be formed into a shape shown in Fig. 10.

### Second Embodiment

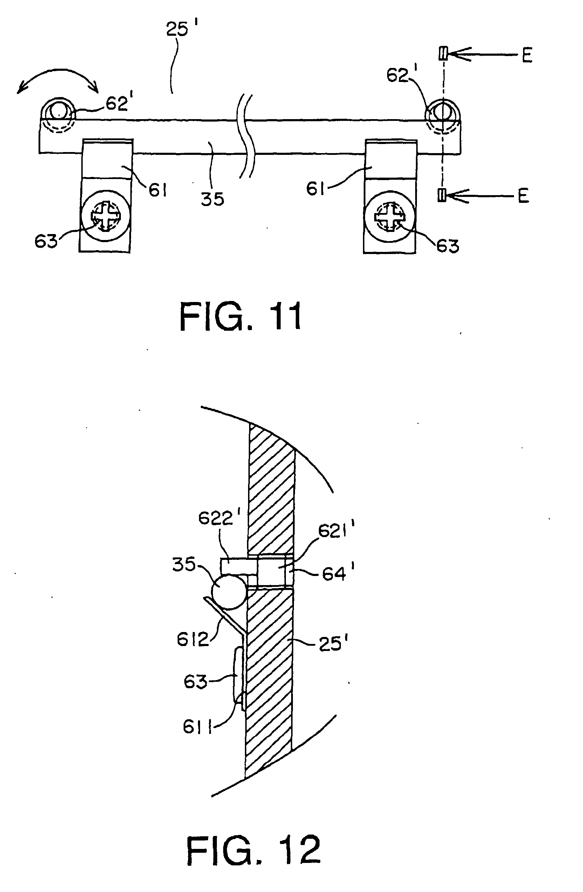

Referring to Figs 11 to 13 and 10, the description will proceed to the off-centering-adjusting mechanism according to a second embodiment of this invention.

The mechanism is, as like to the conventional mechanism, used for adjusting and holding a horizontal angle position, in a horizontal direction parallel to the back surface (which is the left side in Fig. 12) of the back and a front surface of a base plate 25', of the guiding shaft 35 for guiding the optical pickup 23 so that the optical pickup 23 is moved in the disc radial direction (C, D in Figs. 2 and 4 to 6).

The base plate is provided with female threads 64' formed therein so that the female threads 64' are bored through the base plate 25' in a thickness direction perpendicular to said first plate surface of said base plate 25'.

The mechanism comprises two combinations of a bolt 62' and the leaf spring 61 as the same as the first embodiment. The bolt 62' is screwed in the female thread 64'. The leaf spring 61 is attached on the back surface. Furthermore, the leaf spring elastically forces a circumference surface of the guiding shaft 35 arranged above the back surface so that the guiding shaft 35 is moved in horizontal direction parallel to the back surface of the base plate 25'.

The bolt 62' is provided with a main body 621' screwing in the female thread 64 and an eccentric cam 622' formed on a top end surface of the main body 621' so as to upwardly protrude and to be eccentric with respect to a center axis of the main body 621'.

The combinations correspond to one and the other ends of the guiding shaft 35 in a longitudinal direction, respectively.

A circumference surface of the eccentric cam 622' and the leaf spring 61 cooperate with each other in holding the guiding shaft 35 as shown in Fig. 12.

The leaf spring 61 is provided with the first plate portion 611 attached on the back surface of the base plate 25' by the bolt 63 and the second plate portion 612 extended from the first plate portion 611 so that an angle between the back surface and the second plate portion 612 is less than 90 degrees. Because the second plate portion 612 is at an angle less than 90 degrees with the back surface, the guiding shaft 35 is not fall away.

The bolt 62' has no thread head and has a dent portion formed on a bottom end surface of the bolt 62' for receiving and engaging with a tool (not shown) such as a screwdriver or a wrench which rotates the bolt 62'.

With this structure, when the bolt 62' is screwed into or screwed out, the circumference surface of eccentric cam 622' of the bolt 62' is moved in the horizontal direction so as to close to/apart from the leaf spring 61.
Consequently, the guiding shaft 35 is moved in the horizontal direction against a force by the leaf spring 61 or by forcing by the leaf spring 61. Thus, the guiding shaft 35 is adjusted in the horizontal direction by screwing the bolt 62' and held at that position by stopping screwing the bolt 62'. Furthermore, if the bolts 62 are screwed independently from each other, an incline of the guiding shaft 35 in the horizontal direction can be adjusted.

In the angle-adjusting mechanism according to this invention, the parts are small in number, the structure is simple, and a necessary space for arranging is small. Particularly, because the bolt 62' has no screw head and therefore the screw head is never arranged on not only an upper region of the circumference surface of the guiding shaft 35 but also on both sides of the base plate 25', the necessary space of the mechanism is small in a height or a thickness direction. Thus, the angle-adjusting mechanism is advantageous to reducing thickness or height of the optical disc drive.

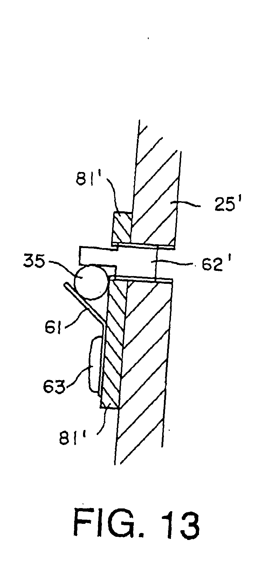

As a transformation of the embodiment, the guiding shaft 35 is arranged above the base plate 25' through a supporting plate 81' as shown in Fig. 13 so that the guiding shaft 35 is apart from the back surface of the base plate 25'.

Furthermore, the leaf spring 61 may be formed into a shape shown in Fig. 10.

While this invention has thus far been described in conjunction with a few preferred embodiments thereof, it will be readily possible for those skilled in the art to put this invention into various other manners. For example, although the description has been exemplified in a case of being applied to the CD-ROM drive in the above-mentioned embodiments, this invention is not restricted to those and may be applicable to a CD-R drive, a CD-RW drive, or a DVD-RAM drive. In addition, although the description has been exemplified in a case of being applied to the tray incorporated type disc drive, this invention may be applicable to the unit contained type disc drive.

Each feature disclosed in this specification (which term includes the claims) and/or shown in the drawings may be incorporated in the invention independently of other disclosed and/or illustrated features. Reference numerals appearing in the claims are by way of illustration only and should be disregarded when interpreting the scope of the claims.

The text of the abstract filed herewith is repeated here as part of the specification.

An angle-adjusting mechanism comprises a bolt, screwed into a female thread formed on a base plate, and an elastic member attached to a first plate surface of the base plate and biasing a circumferential surface of a guiding shaft arranged above the first plate surface so that the guiding shaft is brought close to the first plate surface. A top end surface of the bolt and the elastic member co-operate with each other to hold the guiding shaft. The guiding shaft is adjusted in a vertical direction perpendicular to the first plate surface by rotation of the bolt, and is held in a position at which the bolt rotation is terminated.

## Claims

1. An orientation mechanism for adjusting and holding an angular position of a guiding shaft (35) for guiding an optical pickup (23) so that said optical pickup is moved in a predetermined direction (C, D) radially of a disc, **characterized in that**:
said base plate has a bore therethrough in a thickness direction perpendicular to said first plate surface of said base plate, and a female thread is formed in the resulting bore;
said mechanism comprises a threaded element (62, 62') screwed into said female thread, and an elastic member (61) which is attached to said first plate surface for biasing a circumferential surface of said guiding shaft arranged above said first plate surface;
said threaded element and said elastic member are adapted to co-operate with each other in holding said guiding shaft; and,
said guiding shaft is adapted to be adjusted in a first direction by rotation of said threaded element and to be held in a position at which said threaded element rotation stops.

2. An orientation mechanism as claimed in claim 1, wherein:
said mechanism is adapted to adjust and hold a first angular position of said guiding shaft (35), the first angular position being in a direction perpendicular to a first plate surface of a base plate (25);
said base plate is provided with a primary female thread serving as said female thread;
said mechanism comprises a primary threaded element (62) serving as said threaded element screwed into said primary female thread, and a primary elastic member (61) serving as said elastic member;
said first direction is a direction perpendicular to the first plate surface;
an outer end surface of said primary threaded element is adapted to co-operate with said primary elastic member in holding said guiding shaft; and,
said guiding shaft is adapted to be adjusted in said direction perpendicular to the first plate surface by rotation of said primary threaded element and is held in a position at which said threaded element rotation is stopped.

3. An orientation mechanism as claimed in claim 1, wherein:
said mechanism is adapted to adjust and hold a second angular position of said guiding shaft (35), the second angular position being in a direction parallel to a first plate surface of a base plate (25);
said base plate is provided with a secondary female thread serving as said female thread;
said mechanism comprises a secondary threaded element (62') serving as said threaded element screwed into said secondary female thread, and a secondary elastic member (61) serving as said elastic member;
said first direction is a direction parallel to the first plate surface;
said secondary threaded element is provided with a main body (621') screwed into said secondary female thread, and an eccentric cam (622') formed on an outer end surface of said main body so as to outwardly protrude and to be eccentric with respect to a center axis of said main body;
a circumferential surface of said eccentric cam and said secondary elastic member co-operate with each other in holding said guiding shaft; and,
said guiding shaft is adapted to be adjusted in said direction parallel to the first plate surface by rotation of said secondary threaded element and is held in a position at which said threaded element rotation is stopped.

4. An orientation mechanism as claimed in claim 1, wherein:
said mechanism is adapted to adjust and hold an angular position of the guiding shaft (35) in a direction perpendicular to the first plate surface;
said elastic member (61) is adapted to bias the circumferential surface of said guiding shaft so that said guiding shaft is brought close to said first plate surface; and,
an outer end surface of said threaded element is adapted to co-operate with said elastic member in holding said guiding shaft.

5. An orientation mechanism as in claim 4, wherein:
said elastic member (61) is a leaf spring, said leaf spring being provided with a first plate portion (611) attached on said first plate surface and a second plate portion (612) extended from said first plate portion so that an angle between said first plate surface and said second plate portion is less than 90 degrees; and,
said base plate is further provided with a protrusion (252) on said first plate surface for co-operating with the top end surface of said threaded element and said second plate portion of said leaf spring in holding said guiding shaft.

6. An orientation mechanism as claimed in claim 1, wherein:
said mechanism is adapted to adjust and hold an angular position of the guiding shaft (35) in a direction parallel to the first plate surface;
said elastic member (61) is adapted to bias the circumferential surface of said guiding shaft so that said guiding shaft is pushed in said direction parallel to the first plate surface;
said threaded element is provided with a main body (621') screwed into said secondary female thread, and an eccentric cam (622') formed on an outer end surface of said main body so as to outwardly protrude and to be eccentric with respect to a center axis of said main body;
a circumferential surface of said eccentric cam and said secondary elastic member co-operate with each other in holding said guiding shaft; and,
said guiding shaft is adapted to be adjusted in said direction parallel to the first plate surface by rotation of said secondary threaded element and is held in a position at which said threaded element rotation is stopped.

7. An orientation mechanism as claimed in claim 6, wherein:
said elastic member (61) is a leaf spring, said leaf spring being provided with a first plate portion (611) attached on said first plate surface and a second plate portion (612) extended from said first plate portion so that an angle between said first plate surface and said second plate portion is less than 90 degrees.

8. An orientation mechanism as claimed in claim 4 or 6, wherein said threaded element (62, 62') has no thread head and has a dent portion formed on an inner end surface of said threaded element for receiving and engaging with a tool which rotates said threaded element.

9. An orientation mechanism as claimed in claim 4 or 6, wherein said mechanism comprises two combinations of said elastic member (61) and said threaded element (62, 62'), the combinations corresponding to one and the other ends, respectively, of said guiding shaft (35).
